# EUROPEAN PATENT APPLICATION

(11) **EP 4 155 220 A1**
(43) Date of publication of application: **29.03.2023**
(21) Application number: 22190459.2
(22) Date of filing: 16.08.2022
(51) Int. Cl.: B65D 1/38, B29C 51/02, B29C 51/00, B29C 51/04, B29C 51/08, B29C 51/26, B29C 51/42, B29B 11/02

(54) **PERFORATED PLASTIC TRAY FOR FOOD PRODUCTS WHICH HAS REDUCED WEIGHT**

(30) Priority: 28.09.2021 TR 202115098
(71) Applicant: Eti Gida Sanayi Ve Ticaret Anonim Sirketi, Odunpazari/Eskisehir (TR)
(72) Inventor: GÖRGÜLÜ, Ahmet, Eskisehir (TR); KARANFIL, Abdullah, Eskisehir (TR); ARIKAN, Engin, Eskisehir (TR)
(74) Representative: Yamankaradeniz, Kemal

(57) **Abstract**

Plastic trays of different thickness and made of different materials are used as food carrying trays. The size and geometry of these trays can also vary depending on the product geometry and the number of products. These trays are shaped from flat plates by using lower and upper moulds by thermoforming method in the state of the art. A method has been developed to reduce the usage amount of plastic trays by 65% by applying pre-treatment on flat sheets or rolls with this invention and different product alternatives were produced with this method.

## Description

### Technical Field of the Invention

The present invention relates to the food product carrying tray which is designed by moulding from plastic material without process scrap. The tray produces with thermoform moulding method using perforated material.

### State of the Art

The trays made of different plastic materials and with different thickness (50-3000 micron), PVC (Poly Vinyl Chloride), PET (Polyethylene terephthalate), PP (Poly Propylene), PS (Poly Styrene) etc. are used as food products carrying tray. The size and geometry of these trays can also vary depending on the product geometry and the number of products in one tray. These trays are shaped from sheeted plastic materials by using lower and upper moulds by thermoforming method in the state of the art. It is used as a food carrying trays by shaping the roll materials depending on the food geometry. Some trays which are shaped by injection in mould method use for liquid foods and food trays which need high strength. In other words, some liquid trays (yoghurt trays, etc.) are shaped and used by high pressure injection method of liquid plastic materials into the mould. Moreover, trays (carbonated beverage trays, etc.) shaped by using pre-shaped cores (semi-product) and blown into the mould with pressurized gas are used in the state of the art.

Thermoformed food trays are formed from sheeted plastic materials or roll plastic materials. They are used with or with or without a cover after being shaped as a whole in accordance with the desired strength and product geometry in the state of the art. The depth of the tray is determined according to the weight, sensitivity and geometric dimensions of the product to be stored. The trays and covers, if any, are manufactured as a whole according to the method used. The thickness of the material increases depending on the complexity of the geometry to be shaped, the patterns and the forming depth. Since, the thickness of the material decreases especially at the corner points during forming due to the current technology. Once again, the material is not manufactured with holes, and when holes or openings are desired, these sections are cut or punched according to the state of the art. These extracted parts are separated as scrap.

There are no solutions where the trays produced from the plate by the thermoforming method are produced without scrap. However, different products are produced by the method of shaping liquid plastic materials by injection into the mould of liquid plastic materials or by blow moulding method using preformed materials. However, the desired thickness cannot be produced and not every material can be used in this method. Softer materials such as PP can be used in this method.

A patent search has been made within the scope of this invention, and no method has been found to reduce the amount of use of plastic trays by applying pretreatments on flat plastic sheets or rolls.

Food carrying container which comprises a base consisting of a rigid material having an upper surface, a lower surface and an outer edge, and the upper surface of the sole having a plurality of upwardly connected projections; a top having a top surface, a bottom surface and an outer edge of a rigid material, a plurality of vents incorporated in the top and a moisture absorbing means incorporated in the bottom surface of the top, is described in the patent application numbered EP1053191.

Patent application numbered US6222160 relates to an integrated heating food carrying container having a combination of a heated container for storing the prepared hot food, an insulating layer with layers of metal foil and fiber layers, and an electric heating element.

Patent application numbered DE10229947 relates to a food carrying container which has a heating system for forming a food carrying container comprising a container body having an inner shell made of plastic material, an outer shell, an intermediate space formed between the inner shell and the outer shell, and at least one heating element.

Patent application numbered US20050115944 relates to a food carrying container which comprises a deformable container configured to limit the heat energy transfer of the foodstuff therein, opening on one side of the container for inserting and removing said foodstuff; an integrated radiant barrier configured to provide a barrier against convection and radiation of heat.

Patent application numbered US20120000973 relates to an octagonal food carrying container which comprises a base with two sides and two ends for carrying food or other items, and a curb arranged to cooperate with the base to form an interior zone joined to the base and adapted to contain items; border comprising a right side strip joined to a first side of the base along a right side fold line, and an attached front end cap.

Patent application numbered US6412637 relates to a plastic food carrying container having a bottom and a circumferential wall, comprising a container body, having at least one vent.

In the patent application numbered EP0310698, a lidded, heat-insulated food carrying container which contains a carrying unit and tray type bottom part for storing different types of food that may have different temperatures, is disclosed.

In the patent application numbered US20060048533, a food carrying container containing an air circulation device, in which air is taken in from the food carrying container and blown into the food carrying container, is disclosed. The air circulation device here consists of a fan, an air inlet duct and a fan where the air is indirectly taken from the inside of the food carrying container through this duct.

In the patent application numbered EP2383190, a plastic carrying container for holding foodstuffs is disclosed, consisting of a rectangular base and side walls rising from this base, is disclosed. The upper edge of the side walls referred to herein is formed as a support for a second identical container, wherein the corner areas include side-adjacent walls, a rib-shaped reinforcement that protrudes diagonally from the corner of the container.

In the patent application numbered US6671578, a dishwasher-safe and recyclable container made of non-foam plastic material with a three-dimensional structure and configuration, offering a microwave-safe container with product trays for packaging perishable products, is disclosed.

In the patent application numbered US20160288970, a container used to transport a product such as milk or fruit juice without a case, which comprises a base having a substantially planar region; a top surface having a region parallel to the substantially planar region of the base and a pour spout formed therein; a sidewall formed integrally with and extending between the base and the top surface and a handle extending from the side wall, is disclosed.

In the patent application numbered US9162786, a container which comprises a flexible, stackable container, a sealed package formed from a single sheet of film that preserves the amount of product placed therein, a lid attached to the first side of the package, and outwardly extending corner seals surrounding the first side of the package, is disclosed.

In the patent application numbered US9266546, a roller container for memory foam mattresses with a plastic container on the bottom surface, a pair of trays rotatably mounted to the plastic container on the lower edge, and a handle mounted on the plastic container.

It is not possible to reduce the amount of plastic used materials due to the limitations of the known production methods of trays produced with the same materials in the state of the art. It is not possible to reduce the tray strength and material amount without scrap due to the limitations of available methods and materials. Since the existing materials are in the form of flat sheets or rolls and shaped by the thermoforming method, specifically excessive thickness occurs and the tray strength is adversely affected in the bottom and corner points of deep formed trays. It is not possible to perforate the existing material with known methods, and perforations can only be made by removing the material, and the removed materials are discarded as waste or scrap. This negatively affects the material cost and causes negative environmental effects. There may be points that thin up to 1/8 of the base thickness depending on the tray geometry and forming depth in the case of using existing materials with current methods. For this reason, the thickness of the material to be used is chosen as thicker, up to 30%, considering these problems. This means unnecessary use of plastic materials, more cost and higher environmental impact.

### Technical problems aimed to be solved with the Invention

Up to 65% less plastic material is used depending on the material type, tray geometry and tray size with the present invention. Thus, less plastic waste material is produced, and lower cost trays can be produced and used. In addition, the filled parts are not overly thinned with the help of the sections where there are more holes opened while the material is being shaped, trays with higher strength (because the strength of the surfaces increase) can be produced with the same thickness material used in the state of the art or the base material thickness (10-30% more) can be reduced. Furthermore, the holes prevent or minimize condensation by providing air circulation in high humidity products such as cakes etc. with the help of the inventive perforated trays.

### Description of the Invention

A method for reducing the amount of plastic trays used up to 65% by applying pretreatments on flat sheets or rolls and the production of different product alternatives with this method are provided with the present invention.

### Description of the Figures

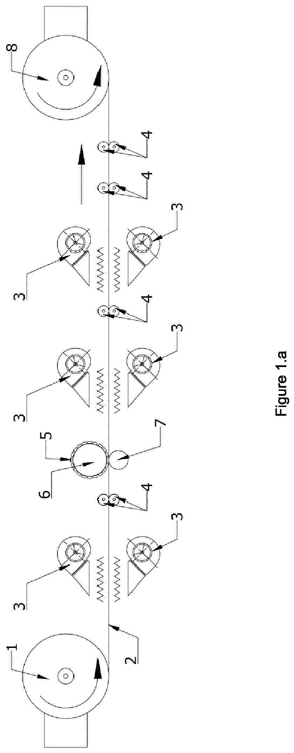

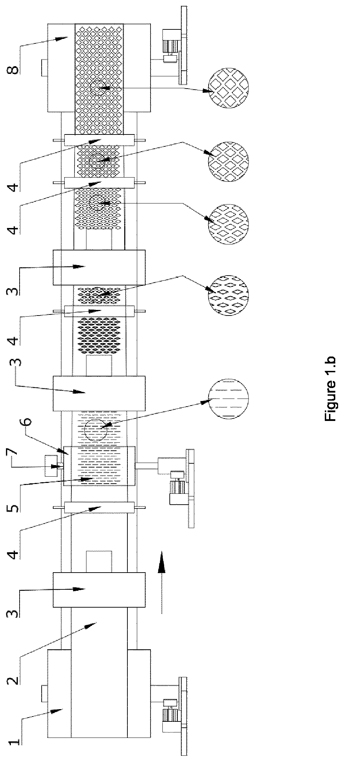

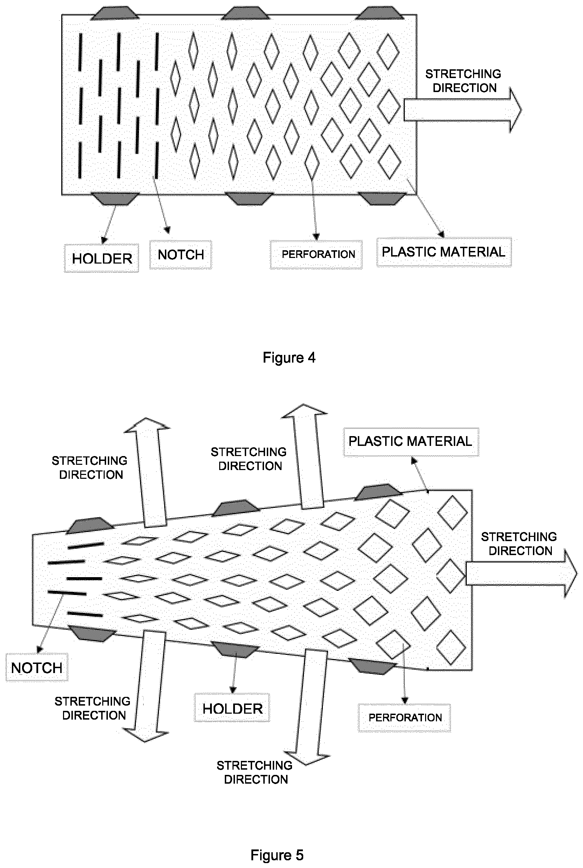

**Figure 1****.a:** Side view of perforated plastic material and pre-treatment method thereof
**Figure 1****.b:** Top view of perforated plastic material and production method thereof
**Figure 2****.a:** Side view of the perforated product carrying tray produced using perforated plastic material and production method thereof

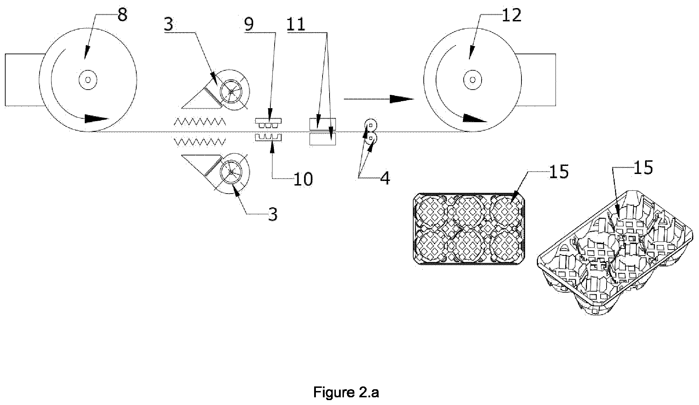

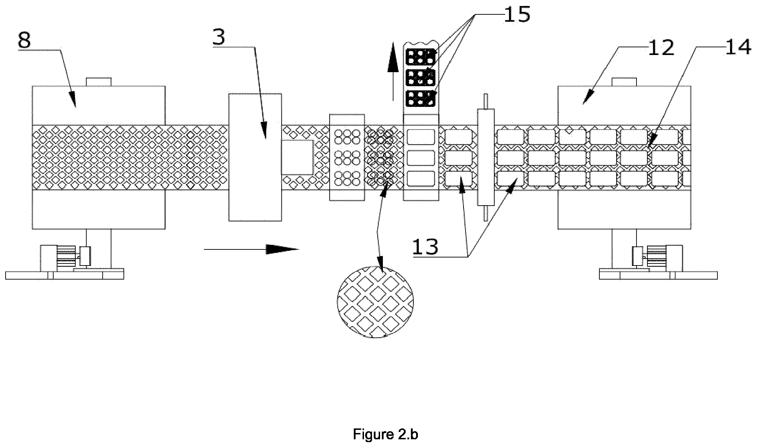

**Figure 2****.b:** Top view of the perforated product carrying tray produced using perforated plastic material and the production method thereof

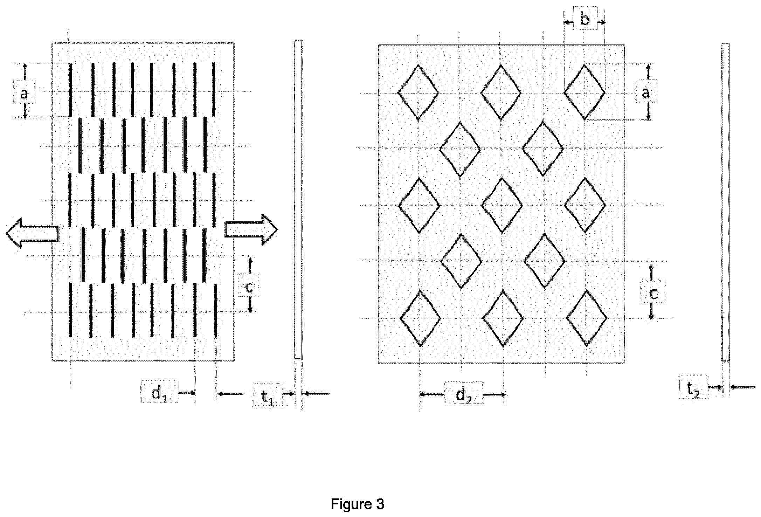

**Figure 3****.** Basic principles of perforated plastic material production
   **a:** Perforation Length
   **b:** Perforation Width
   **c:** Perforation Transverse Pitch
   **d₁:** Perforation Longitudinal Pitch Before Feeding
   **d₂:** Perforation Transverse Pitch After Feeding
   **t₁:** Thickness Before Feeding
   **t₂:** Thickness After Feeding
**Figure 4****.** Creation of perforation spaces by stretching the flow axis
**Figure 5****.** Creation of perforation gaps by stretching the plastic material in both axes

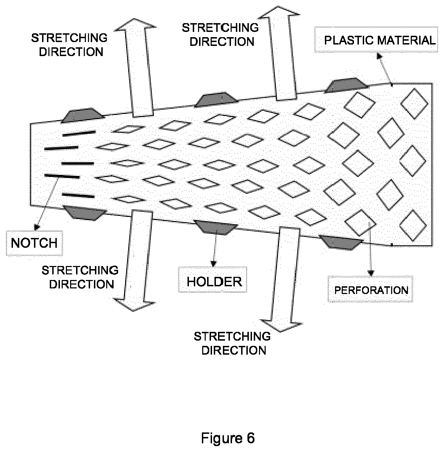

**Figure 6****.** Creation of perforation gaps by stretching the plastic material in the axis perpendicular to the flow direction

### Reference Numbers

**1.** Empty Material (Coil) Drum
**2.** Material to be Processed (Coil)
**3.** Lower-Upper Electric Heater
**4.** Material Feeding Rolls
**5.** Cutting Blades
**6.** Cutting Blades Drum
**7.** Cutting Blade Lower Pressure Drum
**8.** Perforated Material Drum Ready to be Formed
**9.** Upper Mould Providing Forming
**10.** Lower Mould Providing Forming
**11.** Cutting Mould
**12.** Residual Material (Waste) Winding Drum
**13.** Spaces Left in Residual Material (Waste)
**14.** Residual Material from Formed Material (Waste)
**15.** Formed Perforated Product Carrying Tray (Views from Different Angles)

### Detailed Description of the Invention:

The side view of the perforated plastic material and the pre-processing method is shown in Figure 1.a, and the top view of the perforated plastic material and the production method is shown in the Figure 1.b. The material to be processed (coil) (2) is processed by unwinding from an empty material (coil) drum (1) by using thermoformable plastic materials that are rolled into rolls by feeding as a film in the method subjected to the invention. The material is heated with lower-upper electric heaters (3) from the bottom and top of the material before shaping according to its type, prior to the horizontal cutting process thus making cutting easier. The plastic material is covered with rubber, and the material feeding rolls (4) are extruded to the next station by the friction force. The material is fed to the cutting blades drum (6) where cutting blades (5) with 3-50 mm width, based on the tray to be shaped and the product to be stored therein, stand. There is the cutting blade lower pressure drum (7) under the cutting blades drum (6), which creates the cutting force of the cutting blades (5). The lower-upper electric heaters (3), which reheats the material from the top and bottom, is used for the opening of cuts opened at desired intervals in a staggered manner and sizes by heating the material along the flow direction. Material feeding rolls (4) with speed adjustment and higher peripheral speed than the previous feeding rolls (4) are used. If the material is required, lower and upper heaters (3) and material feeding rolls (4) with a higher peripheral speed and speed adjustment than the previous feeding rolls (4) are used depending on the size of the perforation to be created. Peripheral speeds of the material feeding rolls (4) can be adjusted independently and thus the sizes of the perforations (holes) can be adjusted in the material flow direction. The material after perforation is brought to the perforated material drum ready to be formed (8) by means of material feeding rolls (4) and re-wound as a coil. Since the plastic material is fed at different speeds because of stretching the material in the flow direction throughout the processes servomotor driven gearboxes which have adjustable speed are used. They can operate synchronously with feeding rolls (4), and the material is wound perforated material drum (8) before tray forming. The peripheral speed is adjusted by signals generated from encoders (position controllers) connected to the servomotors of the perforated material drum (8) and managed by PLC (Programmable Logic Controller). The servomotors of these roll and drum systems are managed with industrial drivers (invertors) thus precise speed adjustments can be made.

The side view of the perforated product carrying tray and production method produced using perforated plastic material is shown in Figure 2.a, and the top view is shown in Figure 2.b. A perforated material drum (8), with an opening of up to 60%, is unwound by transporting it to another processing line (Figure 2a and Figure 2b). In order to shape the perforated product carrying trays by heat treatment, the perforated material ready to be formed (8) is fed from the drum, by means of the material feeding rolls (4). In order to create the desired product carrying cavities, the material is heated and softened by lower-upper electric heaters (3). The material is shaped as a single or multiple carrying container by means of the forming upper mould providing forming (9) and the lower mould providing forming (10), which are produced as male and female moulds depending on the product geometry and the number of products in the tray. The product carrying tray is cut with a cutting mould (11) whose edges are produced as male and female mould, and the perforated product carrying trays are finished at the next station. The formed perforated product carrying trays (15) are shaped in the desired external dimensions, individually or in combination, in accordance with the product geometry. The residual material (waste, scrap) (14) as a consequence of the formed perforated product carrying trays (15) created, and spaces (13) are formed in this residual material. Then, this residual material (waste, scrap) (14) is fed with the material feeding rolls (4) and the residual material (waste, scrap) is wrapped in the winding drum (12).

It is possible to reduce the amount of plastic in the plastic trays in the packaged products by using new methods so as to transporting food and protect the food until the point of consumption with the present invention. It is aimed to reduce the closed surface of the material by up to 65% with this new method, by reducing the amount of plastic used by reducing the base material thickness and making perforation, without affecting the quality of the stored product and without impairing the strength of the tray. Sheet or roll materials are used with the present invention. Current materials are changed with pre-treatment, taking into account the product type, product geometry, and final packaging type. Notches of equal pitch and length are made on the plastic sheet material with rotating or guillotine type blades in varying sizes depending on the product geometry, type and number in the tray (Figure 3). Then, the plastic material is fed and the cut notches (Figure 3) are heated and the perforation spaces are formed by stretching the material in one or both directions. The parameters and preferred values of the method mentioned are given in Table 1.

**Table 1. Perforated plastic material production parameters and dimensions**

| **Parameters** | | | **Space** | **Choice** |
|---|---|---|---|---|
| a | Perforation Length | mm | 3-50 | 5 |
| b | Perforation Width | mm | 2-50 | 4 |
| c | Perforation Transverse Pitch | mm | 5-50 | 5 |
| d₁ | Perforation Longitudinal Pitch Before Stretching | mm | 3-50 | 2 |
| d2 | Perforation Transverse Pitch After Stretching | mm | 6-200 | 8 |
| t₁ | Thickness Before Stretching | µm | 90-3000 | 350 |
| t₂ | Thickness After Stretching | µm | 55-1800 | 220 |

Post feeding gap was determined in the range of 35 - 65 percent µm, preferably as 50 µm. The materials with notches in suitable sizes are stretched by heating and perforation openings are formed with the developed method (Figure 3). In addition to the perforation openings due to the force applied during feeding, a slight decrease (20-40%) occurs in the thickness of the plastic material. It can be opened by keeping it fixed in the axis perpendicular to the flow - in the flow axis (Figure 4), by keeping it fixed in the flow direction in both axes (Figure 5), by stretching perpendicular to the flow direction (Figure 6) and perforations are formed.

One of the essential elements for forming perforations within the scope of the invention is to make staggered cuts in the range of 3 to 50 mm, preferably 5 mm, before forming. The most important factor to reduce weight, ease of forming and provide container strength is to make the flat base material perforated with 35% to 65% gap without scrap.

In this way, up to 65% less plastic material is used depending on the material type, container geometry and tray size with the present invention. Thus, less plastic scrap material is produced, and lower cost trays can be produced and used. In addition, the filled parts are not overly thinned with the help of the sections where there are more holes opened while the material is being shaped, trays with higher strength (because the strength of the surfaces increase) can be produced with the same thickness material used in the state of the art or the base material thickness (10-30% more) can be reduced. Furthermore, the holes prevent or minimize condensation by providing air circulation in high humidity products such as cakes etc. with the help of the inventive perforated trays.

## Claims

1. A perforated food product carrying tray **characterized in that**; the said tray is produced without waste.

2. Food product tray according to claim 1 that the weight of the tray is reduced between 35% to 65% by weight,

3. Food product tray according to claim 1, the strength of the tray more than existing ones which are produced known technologies with the same base plastic material thickness.

4. Food product container according to claim 1, the thermoforming method can be used for forming.

5. Food product container according to claim 1, all kinds of thermoformable plastic materials can be used.

6. Food product container according to claim 1, the trays can be produced from pre-processed (notched, perforated) sheet or roll plastic materials.
